# EUROPEAN PATENT SPECIFICATION

(11) **EP 4 318 084 B1**
(45) Date of publication and mention of the grant of the patent: **14.01.2026**
(21) Application number: 23758935.3
(22) Date of filing: 18.01.2023
(51) Int. Cl.: G02B 30/56, G02B 5/00

(54) **FIELD-OF-VIEW CONTROL DEVICE APPLIED TO OPTICAL IMAGING SYSTEM, AND OPTICAL IMAGING SYSTEM**
SICHTFELDSTEUERUNGSVORRICHTUNG FÜR OPTISCHES BILDGEBUNGSSYSTEM UND OPTISCHES BILDGEBUNGSSYSTEM
DISPOSITIF DE COMMANDE DE CHAMP DE VISION APPLIQUÉ À UN SYSTÈME D'IMAGERIE OPTIQUE, ET SYSTÈME D'IMAGERIE OPTIQUE

(30) Priority: 24.02.2022 CN 202210173698
(43) Date of publication of application: 07.02.2024
(73) Proprietor: Anhui Easpeed Technology Co., Ltd., Hefei, Anhui 230088 (CN)
(72) Inventor: ZHANG, Liangliang, Hefei, Anhui 230088 (CN); HAN, Dongcheng, Hefei, Anhui 230088 (CN); FAN, Chao, Hefei, Anhui 230088 (CN)
(74) Representative: Nederlandsch Octrooibureau
(86) International application number: PCT/CN2023/072840
(87) International publication number: WO 2023/160310

(56) References cited:
- CN-A- 101 395 524
- CN-A- 112 352 171
- CN-A- 113 809 115
- CN-A- 113 809 115
- CN-A- 114 637 127
- CN-U- 212 010 175
- JP-A- 2011 053 716
- JP-A- 2013 257 529
- KR-A- 20090 114 858
- US-A1- 2009 165 943
- US-A1- 2018 341 130
- US-A1- 2020 031 712
- US-A1- 2021 018 658
- US-A1- 2021 041 719
- US-A1- 2021 096 393
- US-A1- 2022 035 094

## Description

### FIELD

The present disclosure relates to the field of optical manufacturing, and more particularly, to a view field control apparatus applied in an optical imaging system and an optical imaging system.

### BACKGROUND

A planar lens is short for effective negative refractive index planar lens, which enables light to be totally reflected once in each of two layers of array optical waveguides by using two layers of array optical waveguides that are periodically distributed and are orthogonal with each other,. Due to the two layers of array optical waveguides are rectangular structures that are orthogonal with each other, an incident angle during a first total reflection is the same as an exit angle during a second total reflection. All light within a light divergence angle of the light source is correspondingly converged to a symmetrically three-dimensional space with the planar lens as a plane after passing through the planar lens, so as to obtain a floating real image in 1: 1. At present, most displays used as image sources on the market have a large field of angle and are visible in the approximate range of 180 degrees. In this case, imaging characteristics of the planar lens are that: when an observer observes the floating real image, an obliquely residual image appears on each of two sides of the real image; and when a position of human eye deviates from an straight-view position and its deviation angle gradually increases, the floating real image becomes more and more fuzzy, but one of the residual images on the two sides, i.e., a left side and a right side, of the real image becomes clearer and the other one becomes blurred. In addition, the presence of the residual image seriously affects user's watching of the floating real image. US 2021-096393 A1 discloses an aerial display apparatus. CN 113809115 A discloses an array substrate and preparation method thereof, display screen. US 2009-0165943 A1 discloses reducing moire effect in an LCD device comprising a light control film. US 2021-041719 A1 discloses an aerial display apparatus. US 2020-031712 A1 discloses method for manufacturing light control panel, light control panel, optical imaging device, and aerial image forming system. US 2021-018658 A1 discloses processing technology for single-column and multi-ro equivalent negative refractive index plate lens. US 2022-035094 A1 discloses optical waveguide unit, array, and flat lens. US 2018/0341130 A1 discloses viewing angle controlling film, backlight unit using the same and display device using the same.

### SUMMARY

The present disclosure aims to solve at least one of the technical problems in the related art. To this end, an objective of the present disclosure is to provide a view field control apparatus applied in an optical imaging system. The view field control apparatus applied in the optical imaging system may reduce a field of view of the optical imaging system, and suppress generation of residual images on two sides of a floating real image in the optical imaging system, thereby improving a user's viewing experience.

The present disclosure further provides an optical imaging system.

According to the present disclosure, a view field control apparatus applied in an optical imaging system includes: a base body that is light-transmittable; and a plurality of light-shielding portions disposed in the base body and parallel to each other. The plurality of light-shielding portions is sequentially disposed in a first direction of the base body and at least two adjacent light-shielding portions in the plurality of light-shielding portions are spaced apart from each other to form a light-transmittable region between the two adjacent light-shielding portions.

With the view field control apparatus applied in the optical imaging system according to the present disclosure, the base body cooperates with the plurality of light-shielding portions, which may reduce the field of view of the optical imaging system, and suppress the generation of residual images at the two sides of the floating real image in the optical imaging system, thereby improving the user's viewing experience.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a structural general diagram of a planar lens according to an embodiment of the present disclosure;
FIG. 2 is a partially enlarged view at K in FIG. 1 in a side-view direction;
FIG. 3 is an exploded view of a planar lens according to an embodiment of the present disclosure;
FIG. 4 is a schematic structural diagram of two layers of orthogonal optical waveguide arrays of a planar lens in a Z direction according to an embodiment of the present disclosure;
FIG. 5 is a schematic diagram of imaging of two layers of orthogonal optical waveguide arrays of a planar lens according to an embodiment of the present disclosure;
FIG. 6 is a schematic diagram of imaging of a light source image of a planar lens passing through a single-layer optical waveguide array in an X direction according to an embodiment of the present disclosure;
FIG. 7 is a schematic diagram of imaging of the light source image shown in FIG. 6 passing through a single-layer optical waveguide array in a three-dimensional direction;
FIG. 8 is a principle diagram of an imaging optical path of a light source image of a planar lens passing through two layers of orthogonal optical waveguide arrays according to an embodiment of the present disclosure;
FIG. 9a is a schematic diagram of a light direction route of light being normally incident and obliquely incident on a reflection surface of a planar lens;
FIG. 9b is a schematic diagram of a light direction route of light being straight incident on a reflection surface of a planar lens;
FIG. 10 is a schematic diagram of a light direction route of light being obliquely incident on a reflection surface of a planar lens;
FIG. 11 is a schematic diagram of a view field control apparatus according to an example of the present disclosure;
FIG. 12 is a schematic diagram showing a view field control apparatus having a light-shielding portion that is non-light-transmittable according to an example of the present disclosure;
FIG. 13 is a schematic diagram showing a view field control apparatus having a light-shielding portion that is non-light-transmittable according to an example of the present disclosure;
FIG. 14 is a schematic diagram of a view field control apparatus according to an embodiment of the present disclosure;
FIG. 15 is a schematic diagram showing a view field control apparatus having a light-shielding portion that is non-light-transmittable according to another embodiment of the present disclosure;
FIG. 16 a schematic diagram showing a view field control apparatus having a light-shielding portion that is non-light-transmittable according to another embodiment of the present disclosure;
FIG. 17 is an assembly schematic diagram of a first protection sheet, a base body, a light-shielding portion, and a second protection sheet of a view field control apparatus according to an embodiment of the present disclosure;
FIG. 18 is a schematic diagram showing a view field control apparatus having a light-shielding with a trapezoidal section according to an embodiment of the present disclosure;
FIG. 19 is a schematic diagram showing a planar lens and a display of an optical imaging system according to an embodiment of the present disclosure;
FIG. 20 is a schematic diagram of an optical imaging system according to an embodiment of the present disclosure;
FIG. 21 is a schematic diagram of an optical imaging system according to another embodiment of the present disclosure;
FIG. 22 is a schematic diagram of an optical imaging system according to another embodiment of the present disclosure;
FIG. 23 is a schematic diagram showing a planar lens and a display of an optical imaging system in different placement positions according to an embodiment of the present disclosure;
FIG. 24 is a schematic diagram of an optical imaging system according to another embodiment of the present disclosure;
FIG. 25 is a schematic diagram of an optical imaging system according to another embodiment of the present disclosure; and
FIG. 26 is a schematic diagram of an optical imaging system according to another embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

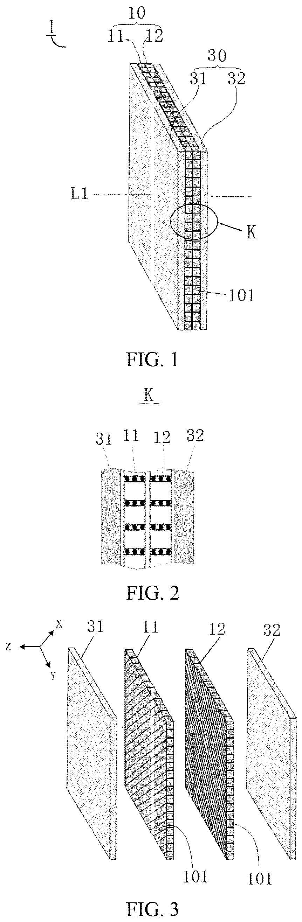

A view field control apparatus 3 applied in an optical imaging system 100 according to embodiments of the present disclosure will be described below with reference to FIG. 1 to FIG. 26.

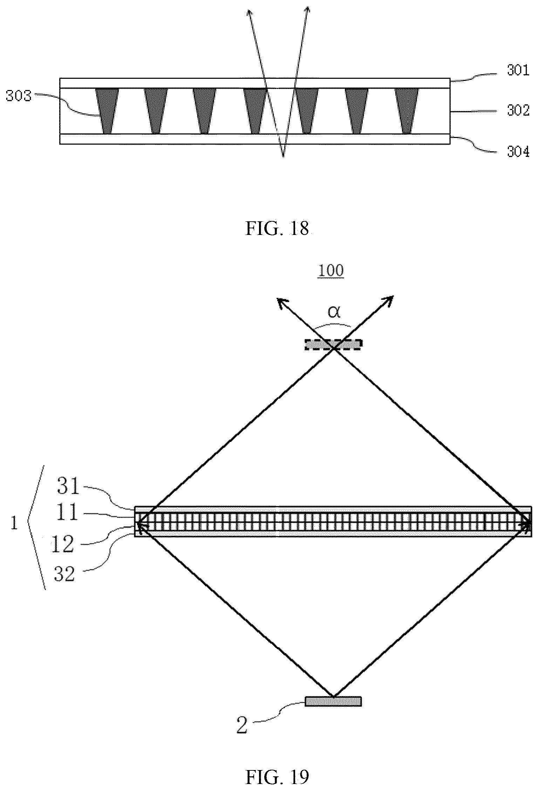

As illustrated in FIG. 19 to FIG. 26, according to the embodiments of the present disclosure, the optical imaging system 100 may include: a planar lens 1, a display 2, and a view field control apparatus. The display 2 is configured to emit light towards the planar lens 1, and the light emitted by the display 2 towards the planar lens 1 passes through the view field control apparatus 3. The view field control apparatus 3 may be disposed at a light entry side of the planar lens 1, or disposed at a light exit side of the display 2, or disposed at both the light entry side of the planar lens 1 and the light exit side of the display 2. For example, when the view field control apparatus 3 is disposed at the light entry side of the planar lens 1, after the display 2 emits the light towards the planar lens 1, the light passes through the planar lens 1 after passing through the view field control apparatus 3. Moreover, it can adjust a field of view of the optical imaging system 100 by controlling the view field control apparatus 3.

Further, FIG. 1 to FIG. 10 shows a basic structure and an imaging principle of the planar lens 1.

The planar lens has a central normal L1. Taking the central normal as a baseline, two opposite sides of the planar lens 1 are an image source side and a viewing side, respectively. That is, a light source of an image P1 is located at the image source side. The image P1 may pass through the planar lens 1 to form a floating real image P2 at the viewing side, and the floating real image P2 is a real image floating in the air. As illustrated in FIG. 1 to FIG. 3, the planar lens 1 is an optical structure with two layers of optical waveguide arrays 10 periodically distributed to be orthogonal with each other, which enables a total reflection of light once on each of the two layers of optical waveguide arrays 10. Since the two layers of optical waveguide arrays 10 are rectangular structures that are orthogonal with each other, an incident angle of a first total reflection is the same as an exit angle of a second total reflection. All light within a divergence angle of light from a light source converge to a viewing side corresponding after passing through the planar lens 1, to obtain a floating real image P2 in 1: 1.

Referring to FIG. 1 to FIG. 3, the planar lens 1 includes two groups of optical waveguide arrays 10. Each group of optical waveguide arrays 10 is composed of single-column multi-row sub-waveguides 101, and each sub-waveguide 101 has a rectangular cross section. The cross section of the sub-waveguide 101 herein refers to a section of the sub-waveguide 101 in a direction perpendicular to a length direction of the sub-waveguide 101.

Referring to FIG. 2 to FIG. 4, the two groups of optical waveguide arrays 10 include a first optical waveguide array 11 and a second optical waveguide array 12. A sub-waveguide 101 of the first optical waveguide array 11 extends in an X direction and forms a plurality of rows in a Y direction. A sub-waveguide 101 of the second optical waveguide array 12 extends in the Y direction and forms a plurality of rows in the X direction. The first optical waveguide array 11 and the second optical waveguide array 12 are arranged in a Z direction, and the X direction, the Y direction, and the Z direction are perpendicular to each other. An extending direction of the sub-waveguide 101 is the length direction of the sub-waveguide 101. A length direction of a single sub-waveguide 101 of the first optical waveguide array 11 is the X direction, a plurality of sub-waveguides 101 of the first optical waveguide array 11 is tightly stacked and arranged in the Y direction, and a width direction of the single sub-waveguide 101 is the Y direction. A length direction of a single sub-waveguide 101 of the second optical waveguide array 12 is the Y direction, a plurality of sub-waveguides 101 of the second optical waveguide array 12 is tightly stacked and arranged in the X direction, and a width direction of the single sub-waveguide 101 is the X direction. The two groups of optical waveguide arrays 10 are in a shape of a flat plate. An arrangement direction of the first optical waveguide array 11 to the second optical waveguide array 12 is the Z direction, and the Z direction is also a thickness direction of the planar lens 1.

A reflection film for totally reflecting light is provided on two side surfaces of each sub-waveguide 101 in a width direction. For example, the reflection film is provided on two side surfaces of the sub-waveguide 101 of the first optical waveguide array 11 in the Y direction. A plurality of reflection films is arranged in the first optical waveguide array 11 in the Y direction because the first optical waveguide array 11 includes the plurality of sub-waveguides 101. The reflection film is provided on two side surfaces of the sub-waveguide 101 of the second optical waveguide array 12 in the X direction. Since the second optical waveguide array 12 includes the plurality of sub-waveguides 101, a plurality of reflection films is arranged in the second optical waveguide array 12 in the X direction.

As illustrated in FIG. 1 and FIG. 3, the planar lens 1 may further include a protection cover plate 30. The protection cover plate 30 is configured to support and protect the optical waveguide array 10. The protection cover plate 30 may only be disposed at a side of the planar lens 1, or disposed at both sides of the planar lens 1. In some embodiments, the protection cover plate 30 is a transparent cover plate. Optionally, the protection cover plate 30 is a glass plate.

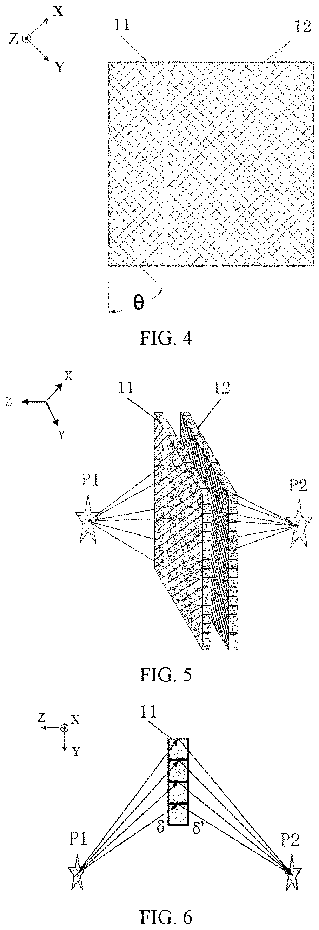

As illustrated in FIG. 4, an outer contour of a formed optical waveguide array 10 is rectangular, and an angle θ between the extending direction of each sub-waveguide 101 and at least two edges of the outer contour of the optical waveguide array 10satisfies: 30°≤θ≤60°. In some embodiments, θ=45°, and at this angle, the floating real image P2 is clear, and the residual image is inconspicuous.

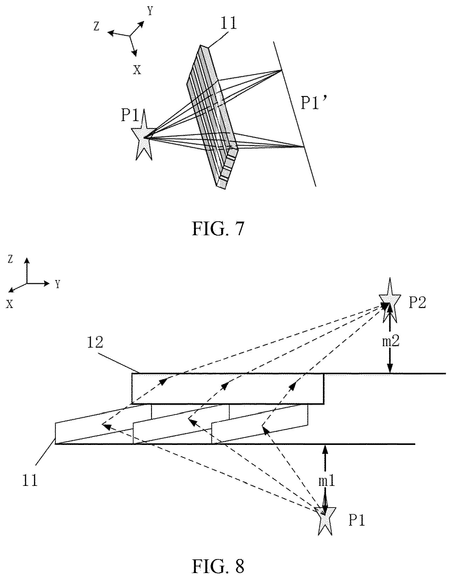

The specific imaging principle is as follows: two optical waveguide arrays 10 are split. As illustrated in FIG. 6 and 7, the first optical waveguide array 11 serves as an example. In the single-layer optical waveguide array 10, after passing through a single-layer optical waveguide array 10, single-point light at the image source side is divided by the sub-waveguide 101 in each row for mirror modulation, and re-converged on a straight line P1' parallel to the X direction to form a point-to-line one-dimensional imaging effect. FIG. 6 shows that an incident angle δ of the single-point light at the image source side being incident on a certain sub-waveguide 101 is equal to an exit angle thereof δ' after being reflected by the sub-waveguide 101.

As illustrated in FIG. 8, in order to achieve two directions (the X direction and the Y direction) intersecting at a point, the two groups of optical waveguide arrays 10 are required to be used in combination, enabling arrangement directions of the two layers of sub-waveguides 101 to be perpendicular to each other, which may perform point-to-point modulation on a target light source image P1. Therefore, light in any direction passes through the double-layer optical waveguide array 10 that is mutually orthogonal, which may realize the floating real image P2 that is re-converged at a symmetrical position relative to the optical waveguide array 10. An imaging distance m2 of the floating real image P2 is the same as an original image distance m1, which is an equidistant imaging. The floating real image P2 is located in the air without requiring carriers such as projection screen. The real image may be presented in the air.

Therefore, the planar lens 1 may make a two-dimensional light source or a three-dimensional light source directly form the real image in the air and realize a real holographic image. It can achieve a naked-eye three-dimensional stereoscopic display characteristic while a large field of view, a large aperture, high image resolution, no distortion and no dispersion are realized.

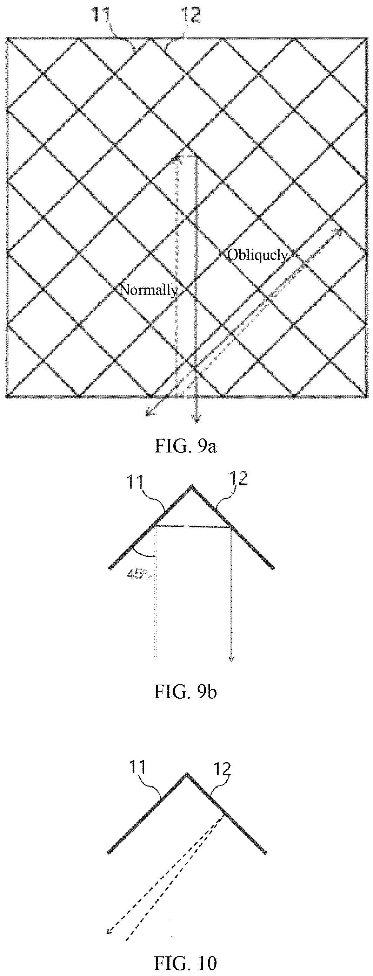

FIG. 9a is a schematic diagram shows that light is normally incident and obliquely incident on the planar lens 1. A light path when the light is normally incident is shown in FIG. 9b, and a light path when the light is obliquely incident is shown in FIG. 10. As illustrated in FIG. 9b, when a viewing angle is 0°, the light is normally incident, and the residual image appears because the light is reflected with an odd number of times in the planar lens 1. A solid line in FIG. 9b is light when light is reflected with two times and the floating real image P2 occurs. A dotted line in FIG. 10 is light when light is reflected with one time and the residual image occurs.

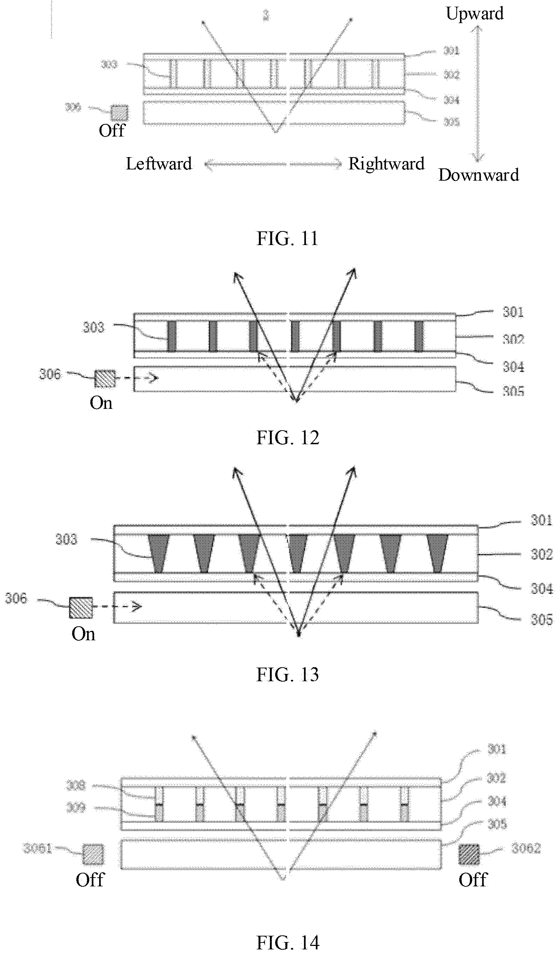

As illustrated in FIG. 11, according to the embodiments of the present disclosure, the view field control apparatus 3 applied in the optical imaging system 100 includes a base body 302 and a plurality of light-shielding portions 303. The plurality of light-shielding portions 303 is configured as a non-light-transmittable structure. The base body 302 is light-transmittable. The plurality of light-shielding portions 303 is disposed in the base body 302 and parallel to each other. Further, the plurality of light-shielding portions 303 is sequentially disposed in a first direction of the base body 302, and the first direction is a left-right direction in FIG. 11. At least two adjacent light-shielding portions 303 in the plurality of light-shielding portions 303 are spaced apart from each other to form a light-transmittable region between the two adjacent light-shielding portions 303. The view field control apparatus 3 may be configured as an active device or a passive device, and a material of the base body 302 may be a light-transmittable material such as optical quartz glass, ultraviolet-transmittable black glass, sodium-calcium-silicon short-wave-ultraviolet-transmittable glass, and sodium-calcium ultraviolet-glass light-transmittable plastic, but the present disclosure is not limited thereto, as long as the light transmittance of the base body 302 is ensured. The light-shielding portion 303 may shield the light and may be an opaque material. In some embodiments, the light-shielding portion 303 may be a black light-absorbing material for absorbing the light, or a high-haze-value material with high light scattering performance, but the present disclosure is not limited thereto, as long as the light-shielding portion 303 can be made of a material that can ensure good light shielding properties.

Further, the light-shielding portion 303 may have a shape designed based on usage requirements. For example, a longitudinal section of the light-shielding portion 303 may be configured as various polygons such as rectangle, trapezoid, and triangle. Compared with the light-shielding portion 303 having a rectangular longitudinal section, the light-shielding portion 303 having a trapezoidal longitudinal section may limit the field of view of the optical imaging system 100 to a greater extent. At least two adjacent light-shielding portions 303 in the plurality of light-shielding portions 303 are spaced apart from each other to form the light-transmittable region between the two adjacent light-shielding portions 303. In some embodiments, the plurality of light-shielding portions 303 is sequentially spaced apart from each other and has a same spacing distance. In some other embodiments of the present disclosure, the plurality of light-shielding portions 303 may be divided into a plurality of groups, and two or three light-shielding portions 303 are taken as a group. The plurality of groups of light-shielding portions 303 are spaced apart from each other to form the light-transmittable region between two adjacent groups of light-shielding portions 303 and have the same spacing distance. When the light enters the view field control apparatus 3, and the light incident in the view field control apparatus 3 deviates from a predetermined route by a predetermined angle or more, the deviated light will be absorbed or scattered by the light-shielding portion 303, which may reduce the field of view of the optical imaging system 100. The field of view may be controlled by adjusting a spacing distance between the plurality of light-shielding portions 303 or a spacing distance between the plurality of groups of light-shielding portions 303 and a thickness of the light-shielding portion 303. For example, the smaller the spacing distance between the plurality of light-shielding portions 303 or the spacing distance between the plurality of groups of light-shielding portions 303, the more the light blocked by the light-shielding portion 303, the smaller an exit angle of the light, and the smaller the field of view of the optical imaging system 100; and the greater the thickness of the light-shielding portion 303, the more the light blocked by the light-shielding portion 303, and the smaller the exit angle of the light, the smaller the field of view of the optical imaging system 100.

Therefore, the base body 302 cooperates with the plurality of light-shielding portions 303, which may reduce the field of view of the optical imaging system 100, and suppress generation of residual images at the two sides of the floating real image in the optical imaging system 100, thereby improving a user's viewing experience.

In some embodiments of the present disclosure, as illustrated in FIG. 11 to FIG. 18, a plurality of mounting portions for mounting the plurality of light-shielding portions 303 is provided in the base body 302. The plurality of light-shielding portions 303 corresponds to the plurality of mounting portions in one-to-one correspondence. It can also be understood that the plurality of light-shielding portions 303 is disposed in the base body 302 through the plurality of mounting portions. A mounting portion is for mounting a light-shielding portion 303, and the light-shielding portion 303 may be connected to the mounting portion by bonding. For example, the light-shielding portion 303 and the mounting portion are bonded by glue, but the present disclosure is not limited thereto. The light-shielding portion 303 may also be engaged with the mounting portion. For example, the light-shielding portion 303 has a protrusion disposed thereon, the mounting portion has a groove disposed thereon, and the light-shielding portion 303 is engaged with the mounting portion by engaging the protrusion with the groove. With this arrangement, connection stability between the base body 302 and the light-shielding portion 303 may be improved.

In some embodiments of the present disclosure, as illustrated in FIG. 11 to FIG. 18, the plurality of mounting portions is configured as a mounting groove. The mounting groove extends in a thickness direction of the base body 302 (an up-down direction in FIG. 13). Further, the mounting groove may penetrate the base body 302 in the thickness direction of the base body 302. It should be noted that the plurality of light-shielding portions 303 is disposed in a plurality of mounting grooves, and the plurality of mounting grooves has a shape corresponding to a shape of the light-shielding portion 303. With this arrangement, the connection stability between the base body 302 and the light-shielding portion 303 may be improved.

In some embodiments of the present disclosure, as illustrated in FIG. 11 to FIG. 18, the light-shielding portion 303 may be perpendicular to the base body 302 in a thickness direction of the base body 302. The light-shielding portion 303 is provided to be perpendicular to the base body 302, enabling the exit angle of the light and the field of view of the optical imaging system 100 to be smaller, suppressing the generation of the residual images at the two sides of the floating real image in the optical imaging system 100, thereby improving the user's viewing experience.

In some embodiments of the present disclosure, the light-shielding portion 303 extends obliquely in a thickness direction of the base body 302. It should be explained that the plurality of light-shielding portions 303 extends obliquely in a same direction. For example, the plurality of light-shielding portions 303 extends to the upper left of the base body 302 or to the upper right of the base body 302. With this arrangement, it enables the light-shielding portion 303 to shield the light in different directions thereby widening an application range of the view field control apparatus 3.

In some embodiments of the present disclosure, as illustrated in FIG. 11 to FIG. 18, the view field control apparatus 3 further includes a first protection sheet 301 and a second protection sheet 304. The base body 302 has a first surface and a second surface that are opposite to each other in a thickness direction of the base body 302. The first protection sheet 301 is disposed on the first surface and is light-transmittable. The second protection sheet 304 is disposed on the second surface and is light-transmittable. It should be explained that the first protection sheet 301 and the second protection sheet 304 may protect the base body 302 and the light-shielding portion 303. The first protection sheet 301 and the second protection sheet 304 may be connected to the base body 302 by bonding, or may be connected to the base body 302 in a threaded manner, so as to achieve a detachable connection between the first protection sheet 301 and the second protection sheet 304 and the base body 302. With this arrangement, it can protect the base body 302 and the light-shielding portion 303 by using the first protection sheet 301 and the second protection sheet 304, improve stability of an overall structure of the view field control apparatus 3, and prevent relative positions between the base body 302 and the light-shielding portion 303 from changing.

In some examples not falling under the scope of protection, as illustrated in FIG. 11 to FIG. 13, the view field control apparatus 3 may further include a backlight source 306 configured to selectively illuminate the plurality of light-shielding portions 303 to switch the plurality of light-shielding portions 303 between a light-shielding state and a non-light-shielding state. At this time, a material of the light-shielding portion 303 may be a mixture of a photochromic material and a transparent substance, and the transparent substance may be a resin. A wavelength of light emitted by the backlight source 306 is different from a wavelength of light emitted by the display 2 in the optical imaging system 100, and the light emitted by the backlight source 306 may be provided as a short wavelength light having a 400 nm or smaller wavelength. When the light-shielding portion 303 is illuminated by the backlight source 306, the photochromic material may change from a transparent state to an opaque state. At this time, the light-shielding portion 303 is in a light-shielding state, and the optical imaging system 100 has the smallest field of view and is in a narrow viewing angle mode. A state change of the photochromic material is reversible. When the backlight source 306 stops illuminating, the photochromic material changes from the opaque state to the transparent state. At this time, the light-shielding portion 303 is in a non-light-shielding state, and the optical imaging system 100 has the greatest field of view and is in a wide viewing angle mode. Alternatively, when the light-shielding portion 303 is illuminated by the backlight source 306, the photochromic material may change from the opaque state to the transparent state. Moreover, after the backlight source 306 stops illuminating, the photochromic material changes from the transparent state to the opaque state. Therefore, the light-shielding portion 303 switches between the light-shielding state and the non-light-shielding state. With this arrangement, it can adjust the field of view of the optical imaging system 100 by changing the light-shielding state of the light-shielding portion 303 and improve practicability of the view field control apparatus 3.

In the examples not falling under the scope of protection, as illustrated in FIG. 11 to FIG. 13, the view field control apparatus 3 may further include a light guide plate 305 configured to guide light emitted by the backlight source 306 to the plurality of light-shielding portions 303. It should be noted that the backlight source 306 may be disposed radially outside the light guide plate 305. When the backlight source 306 emits the light, the light guide plate 305 guides the light emitted by the backlight source 306 to the light-shielding portion 303, so that the light-shielding state of the light-shielding portion 303 changes. With such an arrangement, a case where the backlight source 306 shields the light emitted by the optical imaging system 100 to cause an incomplete floating real image can be avoided.

According to the invention, as illustrated in FIG. 14 to FIG. 16, at least one of the plurality of light-shielding portions 303 includes: a first light-shielding portion 308 and a second light-shielding portion 309. The first light-shielding portion 308 and the second light-shielding portion 309 are stacked in the thickness direction of the base body 302. Further, each light-shielding portion 303 includes the first light-shielding portion 308 and the second light-shielding portion 309. The backlight source 306 includes a first backlight source 3061 and a second backlight source 3062. The first backlight source 3061 is configured to selectively illuminate the first light-shielding portion 308. The second backlight source 3062 is configured to selectively illuminate the second light-shielding portion 309. It should be noted that both the first light-shielding portion 308 and the second light-shielding portion 309 may be rectangular. A material of the first light-shielding portion 308 may include a first photochromic material, and when the first photochromic material is illuminated by the first backlight source 3061, the first photochromic material may change from the transparent state to the opaque state; and after the first backlight source 3061 stops illuminating, the first photochromic material changes from the opaque state to the transparent state. A material of the second light-shielding portion 309 may include a second photochromic material, and when the second photochromic material is illuminated by the second backlight source 3062, the second photochromic material may change from the transparent state to the opaque state; and after the second backlight source 3062 stops illuminating, the second photochromic material changes from the opaque state to the transparent state.

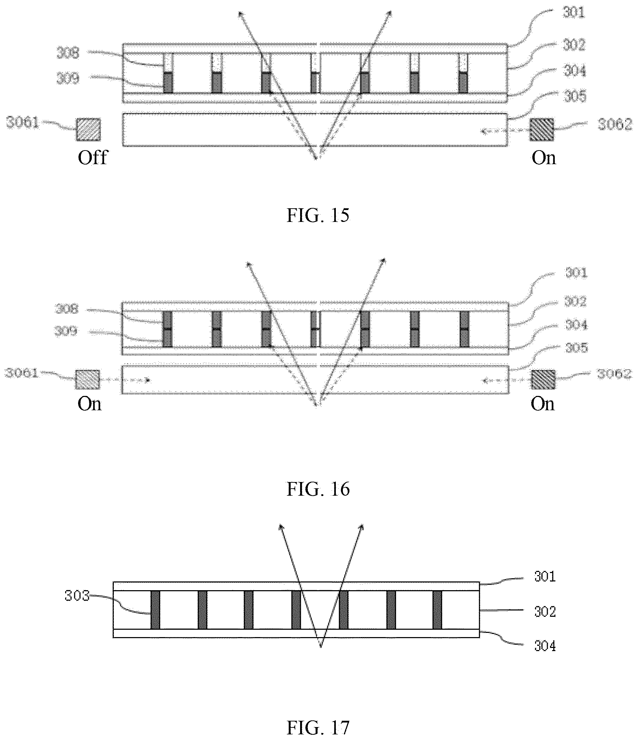

Further, light emitted by the first backlight source 3061 may be a short wavelength light having a 400 nm or smaller wavelength, and a wavelength of light emitted by the second backlight source 3062 is smaller than a wavelength of the light emitted by the first backlight source 3061. As illustrated in FIG. 14, when the first backlight source 3061 and the second backlight source 3062 are both in an off state, the first light-shielding portion 308 and the second light-shielding portion 309 are both in the non-light-shielding state. At this time, the optical imaging system 100 has the largest field of view and is in the wide viewing angle mode. As illustrated in FIG. 15, when the first backlight source 3061 is switched off and the second backlight source 3062 is switched on, the first light-shielding portion 308 is in the non-light-shielding state, and the second light-shielding portion 309 is in the light-shielding state. At this time, the optical imaging system 100 has a moderate field of view and is in a medium viewing angle mode. As illustrated in FIG. 16, when the first backlight source 3061 and the second backlight source 3062 are both in an on state, both the first light-shielding portion 308 and the second light-shielding portion 309 are in the light-shielding state. At this time, the optical imaging system 100 has the smallest field of view and is in the narrow viewing angle mode. In this way, the field of view of the optical imaging system 100 may be freely selected by controlling the on or off of the first backlight source 3061 and the second backlight source 3062, so as to realize free switching among the three field angle modes.

In some other embodiments of the present disclosure, when the first photochromic material is illuminated by the first backlight source 3061, the first photochromic material may change from the transparent state to the opaque state. After the first backlight source 3061 stops illuminating, the first photochromic material changes from the opaque state to the transparent state. When the second photochromic material is illuminated by the second backlight source 3062, the second photochromic material may change from the opaque state to the transparent state. After the second backlight source 3062 stops illuminating, the second photochromic material changes from the transparent state to the opaque state. Further, the light emitted by the first backlight source 3061 may be a short wavelength light having a 400 nm or smaller wavelength, and the wavelength of the light emitted by the second backlight source 3062 is smaller than the wavelength of the light emitted by the first backlight source 3061.

When both the first backlight source 3061 and the second backlight source 3062 are in the off state, the first light-shielding portion 308 is in the non-light-shielding state, and the second light-shielding portion 309 is in the light-shielding state; or when the first backlight source 3061 and the second backlight source 3062 are both in the on state, the first light-shielding portion 308 is in the light-shielding state, and the second light-shielding portion 309 is in the non-light-shielding state. At this time, the optical imaging system 100 has the moderate field of view and is in the medium viewing angle mode. When the first backlight source 3061 is switched off and the second backlight source 3062 is switched on, both the first light-shielding portion 308 and the second light-shielding portion 309 are in the non-light-shielding state. At this time, the optical imaging system 100 has the largest field of view and is in the wide viewing angle mode. When the first backlight source 3061 is switched on and the second backlight source 3062 is switched off, both the first light-shielding portion 308 and the second light-shielding portion 309 are in the light-shielding state. At this time, the optical imaging system 100 has the smallest field of view and is in the narrow viewing angle mode. Thus, the field of view of the optical imaging system 100 may be freely selected by controlling the on or off of the first backlight source 3061 and the second backlight source 3062, so as to realize the free switching among the three field angle modes.

The first backlight source 3061 and the second backlight source 3062 may be disposed radially outside the light guide plate 305. Further, on an optical path of the light emitted by the backlight source, the light guide plate 305 may be disposed on an upstream side of the base body 302, and the first backlight source 3061 and the second backlight source 3062 may be disposed radially outside the light guide plate 305. When the first backlight source 3061 and the second backlight source 3062 emit the light, the light guide plate 305 guides the light emitted by the first backlight source 3061 and the light emitted by the second backlight source 3062 to the first light-shielding portion 308 and the second light-shielding portion 309, respectively, which enables the light-shielding states of the first light-shielding portion 308 and the second light-shielding portion 309 to change. With this arrangement, it can avoid the case where the backlight source 306 shields the light emitted by the optical imaging system 100 to cause the incomplete floating real image.

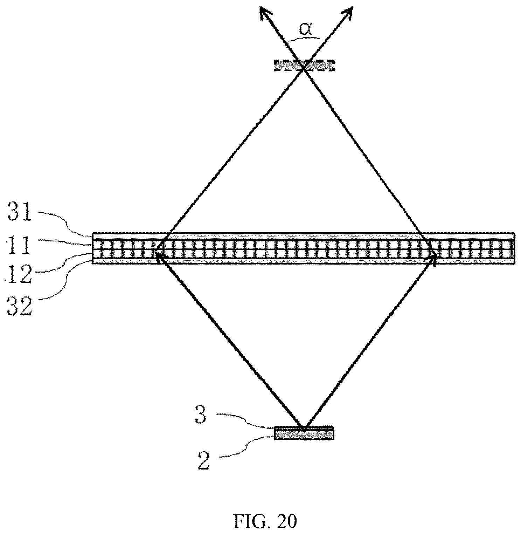

In an embodiment of the present disclosure, as illustrated in FIG. 20, the view field control apparatus 3 may be disposed on a surface of the display 2 close to the planar lens 1, the surface of the display 2 close to the planar lens 1 is the light exit side of the display 2, and the view field control apparatus 3 is tightly attached to the display 2. The view field control apparatus 3 may be configured as one of the view field control apparatuses 3 described above, the light emitted by the display 2 having an exit angle that is regulated and controlled by the view field control apparatus 3, enters the planar lens 1 and is converged to form an image in the air, and α is an actually horizontal field of view of the floating real image.

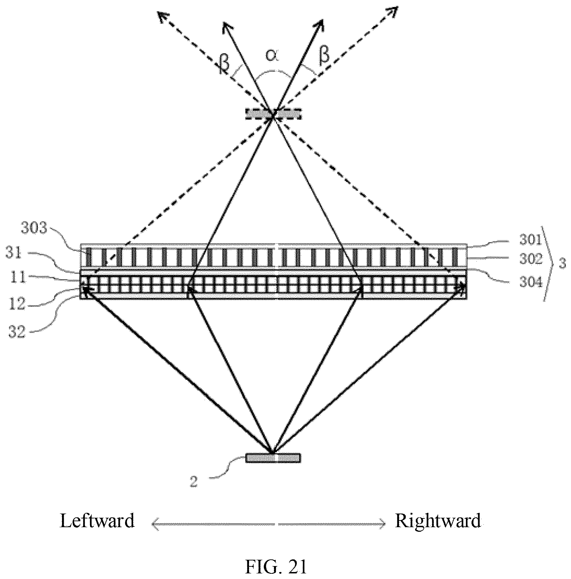

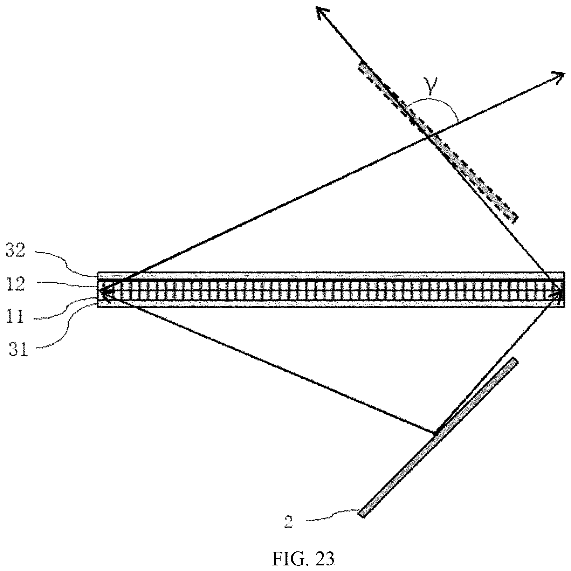

In some embodiments of the present disclosure, as illustrated in FIG. 21 to FIG. 22, the view field control apparatus 3 is disposed on a surface of the planar lens 1 away from and/or close to the display 2. It should be noted that, in an embodiment of the present disclosure, as illustrated in FIG. 21, the view field control apparatus 3 may be disposed on the surface of the planar lens 1 away from the display 2, the surface of the planar lens 1 away from the display 2 is the light exit side of the planar lens 1, and the view field control apparatus 3 is tightly attached to the display 2. The view field control apparatus 3 may be configured as the one of the view field control apparatuses 3 described above, and an arrangement direction of the light-shielding portions 303 of the view field control apparatus 3 is a left-right direction in FIG. 23. After light of the display 2 is incident on the planar lens 1, the light of the display 2 is converged to form an image in the air after the exit angle of light is controlled and regulated by the view field control apparatus 3, α is the actually horizontal field of view of the floating real image, and 2β is a reduced horizontal field of view after the view field control apparatus 3 is added.

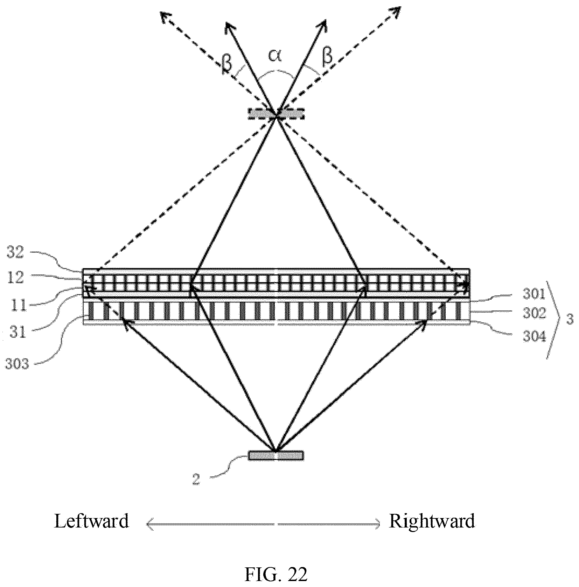

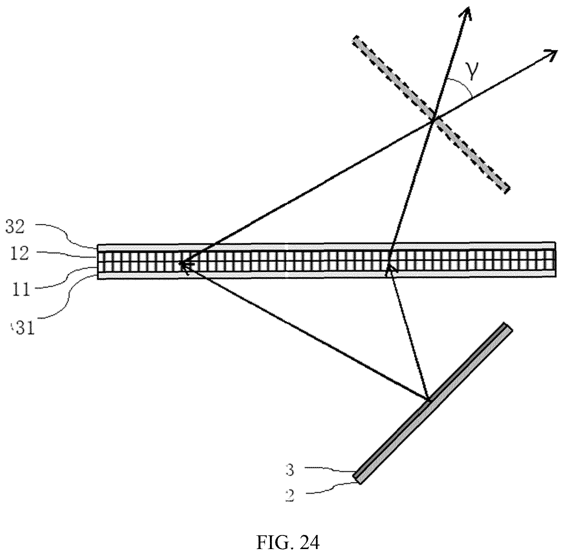

In another embodiment of the present disclosure, as illustrated in FIG. 22, the view field control apparatus 3 may be disposed on the surface of the planar lens 1 close to the display 2, the surface of the planar lens 1 close to the display 2 is the light entry side of the planar lens 1, and the view field control apparatus 3 is tightly attached to the display 2. The view field control apparatus 3 may be configured as the one of the view field control apparatuses 3 described above, and the arrangement direction of the light-shielding portions 303 of the view field control apparatus 3 is a left-right direction in FIG. 24. The light of the display 2 is incident on the planar lens 1 after the exit angle of the light is regulated and controlled by the view field control apparatus 3, the light of the display 2 is converged to form the image in the air, α is the actually horizontal field of view of the floating real image, and 2β is the reduced horizontal field of view after the view field control apparatus 3 is added.

In some embodiments of the present disclosure, as illustrated in FIG. 23, an angle between the display 2 and the planar lens 1 is provided. It should be noted that, as illustrated in FIG. 24, the view field control apparatus 3 may be disposed on the surface of the display 2 close to the planar lens 1, and the view field control apparatus 3 is tightly attached to the display 2 and may be configured as the one of the view field control apparatuses 3 described above. The view field control apparatus 3 is attached to the display 2 and the view field control apparatus 3 and the display 2 are obliquely disposed relative to the planar lens 1. The exit angle of the light emitted by the display 2 is regulated and controlled by the view field control apparatus 3 to enter the planar lens 1 and is converged to form an image in the air, and γ is an actually vertical field of view of the floating real image.

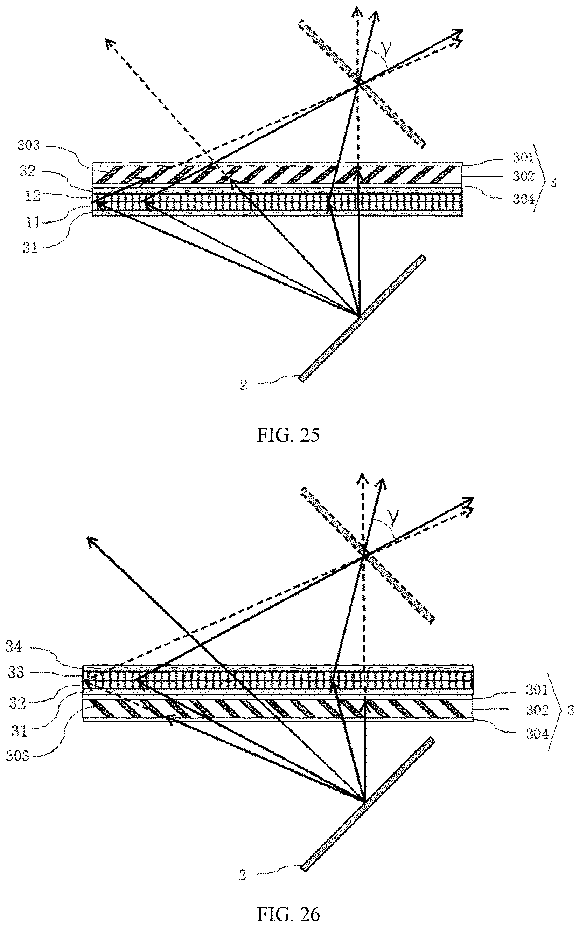

In another embodiment of the present disclosure, as illustrated in FIG. 25, the view field control apparatus 3 may be disposed on the surface of the planar lens 1 away from the display 2, and the surface of the display 2 away from the planar lens 1 is the light entry side of the display 2. The view field control apparatus 3 is tightly attached to the planar lens 1 and may be configured as the one of the above view field control apparatuses 3. The display 2 is obliquely disposed relative to the view field control apparatus 3 and the planar lens 1. After the light emitted by the display 2 is incident on the planar lens 1, the light having an exit angle that is regulated and controlled by the view field control apparatus 3 is converged to form an image in the air. γ is the actually vertical field of view of the floating real image. In order for shielding the light perpendicularly incident onto the planar lens 1 from the display 2 and achieving a peep-proof effect, the cross section of the light-shielding portion 303 may be configured as a parallelogram. Meanwhile, the view field control apparatus 3 can completely shield those light that is not reflected by the optical waveguide in the planar lens 1 and is directly transmitted, enabling the observer to not observe the image on a rear side of the floating real image by directly observing the display 2 and to observe the image through the floating real image. In addition, the floating real image has a small field of view, thereby achieving the good peep-proof effect.

In another embodiment of the present disclosure, as illustrated in FIG. 26, the view field control apparatus 3 may be disposed on the surface of the planar lens 1 close to the display 2, may be tightly attached to the planar lens 1, and may be configured as the one of the above view field control apparatuses 3. The display 2 is obliquely disposed relative to the view field control apparatus 3 and the planar lens 1. After the light emitted by the display 2 is incident on the planar lens 1, the light having an exit angle that is regulated and controlled by the view field control apparatus 3 is converged to form an image in the air, γ is the actually vertical field of view of the floating real image. Preferably, the cross section of the light-shielding portion 303 may be configured as the parallelogram. With this arrangement, it can effectively shield the light perpendicularly incident on the planar lens 1 by the display 2.

In the description of this specification, descriptions with reference to the terms "an embodiment," "some embodiments," "schematic embodiments," "examples," "specific examples," or "some examples", etc. mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure are illustrated and described above, it can be understood by those of ordinary skill in the art that various changes, modifications, replacement and variation may be made to these embodiments without departing from the principles of the present disclosure. The scope of the present disclosure is defined by the claims.

## Claims

1. A view field control apparatus for an optical imaging system, the view field control apparatus comprising:
a base body (302) that is light-transmittable; and
a plurality of light-shielding portions (303) disposed in the base body (302) and parallel to each other, the plurality of light-shielding portions (303) being sequentially disposed in a first direction of the base body (302) and at least two adjacent light-shielding portions (303) in the plurality of light-shielding portions (303) being spaced apart from each other to form a light-transmittable region between the two adjacent light-shielding portions (303),
wherein the view field control apparatus further comprises a backlight source (306) configured to selectively illuminate the plurality of light-shielding portions (303) to switch the plurality of light-shielding portions (303) between a light-shielding state and a non-light-shielding state,
wherein at least one of the plurality of light-shielding portions (303) comprises: a first light-shielding portion (308) and a second light-shielding portion (309) that are stacked in the thickness direction of the base body (302), and the backlight source comprises: a first backlight source (3061) configured to selectively illuminate the first light-shielding portion (308) and a second backlight source (3062) configured to selectively illuminate the second light-shielding portion (309),
**characterized in that**
the view field control apparatus further comprises a light guide plate (305) configured to guide light emitted by the backlight sources (306) to the light-shielding portions (303) corresponding to the backlight sources (306), and the first backlight source (3061) and the second backlight source (3062) are disposed radially outside the light guide plate (305).

2. The view field control apparatus according to claim 1, wherein a plurality of mounting portions for mounting the plurality of light-shielding portions (303) is provided in the base body (302), the plurality of light-shielding portions (303) corresponding to the plurality of mounting portions in one-to-one correspondence.

3. The view field control apparatus according to claim 2, wherein the plurality of mounting portions is configured as a mounting groove, the mounting groove extending in a thickness direction of the base body (302).

4. The view field control apparatus according to claim 2 or 3, wherein the plurality of light-shielding portions (303) is perpendicular to the base body (302) in a thickness direction of the base body (302).

5. The view field control apparatus according to claim 2, wherein the plurality of light-shielding portions (303) extends obliquely in a thickness direction of the base body (302).

6. The view field control apparatus according to any one of claims 1 to 5, wherein:
the base body (302) has a first surface and a second surface that are opposite to each other in a thickness direction of the base body (302), and
the view field control apparatus further comprises:
a first protection sheet (301) that is light-transmittable and is disposed on the first surface; and
a second protection sheet (304) that is light-transmittable and is disposed on the second surface.

7. The view field control apparatus according to any one of claims 1 to 6, wherein the plurality of light-shielding portions (303) is configured as a non-light-transmittable structure.

8. An optical imaging system, comprising:
a planar lens (1);
a display (2) configured to emit light towards the planar lens (1); and
the view field control apparatus according to any one of claims 1 to 7,
wherein the view field control apparatus is disposed in the planar lens (1) and/or the display (2), and the light emitted by the display (2) towards the planar lens (1) passes through the view field control apparatus.

9. The optical imaging system according to claim 8, wherein the view field control apparatus is disposed on a surface of the planar lens (1) away from and/or close to the display (2).

## Patentansprüche

1. Sichtfeldsteuerungsvorrichtung für ein optisches Bildgebungssystem, **dadurch gekennzeichnet, dass** die Sichtfeldsteuerungsvorrichtung Folgendes umfasst:
einen Grundkörper (302), der lichtdurchlässig ist; und
mehrere lichtabschirmende Abschnitte (303), die in dem Grundkörper (302) und parallel zueinander angeordnet sind, wobei die mehreren lichtabschirmenden Abschnitte (303) sequenziell in einer ersten Richtung des Grundkörpers (302) angeordnet sind und mindestens zwei benachbarte lichtabschirmende Abschnitte (303) in den mehreren lichtabschirmenden Abschnitten (303) voneinander beabstandet sind, um einen lichtdurchlässigen Bereich zwischen den beiden benachbarten lichtabschirmenden Abschnitten (303) zu bilden,
wobei die Sichtfeldsteuerungsvorrichtung ferner eine Hintergrundbeleuchtungsquelle (306) umfasst, die so konfiguriert ist, dass sie die mehreren lichtabschirmenden Abschnitte (303) selektiv beleuchtet, um die mehreren lichtabschirmenden Abschnitte (303) zwischen einem Lichtabschirmungszustand und einem Nicht-Lichtabschirmungszustand umzuschalten,
wobei mindestens einer der mehreren lichtabschirmenden Abschnitte (303) umfasst: einen ersten lichtabschirmenden Abschnitt (308) und einen zweiten lichtabschirmenden Abschnitt (309), die in der Dickenrichtung des Grundkörpers (302) gestapelt sind, und die Hintergrundbeleuchtungsquelle umfasst: eine erste Hintergrundbeleuchtungsquelle (3061), die so konfiguriert ist, dass sie selektiv den ersten lichtabschirmenden Abschnitt (308) beleuchtet, und eine zweite Hintergrundbeleuchtungsquelle (3062), die so konfiguriert ist, dass sie selektiv den zweiten lichtabschirmenden Abschnitt (309) beleuchtet,
**dadurch gekennzeichnet, dass** die Sichtfeldsteuerungsvorrichtung ferner eine Lichtleitplatte (305) umfasst, die so konfiguriert ist, dass sie das von den Hintergrundbeleuchtungsquellen (306) emittierte Licht zu den den Hintergrundbeleuchtungsquellen (306) entsprechenden lichtabschirmenden Abschnitten (303) leitet, und die erste Hintergrundbeleuchtungsquelle (3061) und die zweite Hintergrundbeleuchtungsquelle (3062) radial außerhalb der Lichtleitplatte (305) angeordnet sind.

2. Sichtfeldsteuerungsvorrichtung nach Anspruch 1, wobei im Grundkörper (302) mehrere Montageabschnitte zur Montage der mehreren lichtabschirmenden Abschnitte (303) vorgesehen sind, die mehreren lichtabschirmenden Abschnitte (303) den mehreren Montageabschnitten in einer Einszu-Eins-Entsprechung entsprechen.

3. Sichtfeldsteuerungsvorrichtung nach Anspruch 2, wobei die mehreren Montageabschnitte als Montagenut ausgebildet sind, und sich die Montagenut in einer Dickenrichtung des Grundkörpers (302) erstreckt.

4. Sichtfeldsteuerungsvorrichtung nach Anspruch 2 oder 3, wobei die mehreren lichtabschirmenden Abschnitte (303) in einer Dickenrichtung des Grundkörpers (302) senkrecht zu dem Grundkörper (302) stehen.

5. Sichtfeldsteuerungsvorrichtung nach Anspruch 2, wobei sich die mehreren lichtabschirmenden Abschnitte (303) schräg in einer Dickenrichtung des Grundkörpers (302) erstrecken.

6. Sichtfeldsteuerungsvorrichtung nach einem der Ansprüche 1 bis 5, wobei:
der Grundkörper (302) eine erste Oberfläche und eine zweite Oberfläche aufweist, die einander in einer Dickenrichtung des Grundkörpers (302) gegenüberliegen; und
die Sichtfeldsteuerungsvorrichtung ferner Folgendes umfasst:
eine erste Schutzplatte (301), die lichtdurchlässig ist und auf der ersten Oberfläche angeordnet ist; und
eine zweite Schutzplatte (304), die lichtdurchlässig ist und auf der zweiten Oberfläche angeordnet ist.

7. Sichtfeldsteuerungsvorrichtung nach einem der Ansprüche 1 bis 6, wobei die mehreren lichtabschirmenden Abschnitte (303) als eine nicht lichtdurchlässige Struktur ausgebildet sind.

8. Optisches Bildgebungssystem, umfassend:
eine planare Linse (1);
eine Anzeige (2), die so konfiguriert ist, dass sie Licht in Richtung der planaren Linse (1) emittiert; und
die Sichtfeldsteuerungsvorrichtung nach einem der Ansprüche 1 bis 7, wobei die Sichtfeldsteuerungsvorrichtung in der planaren Linse (1) und/oder der Anzeige (2) angeordnet ist und das von der Anzeige (2) in Richtung der planaren Linse (1) emittierte Licht durch die Sichtfeldsteuerungsvorrichtung hindurchgeht.

9. Optisches Bildgebungssystem nach Anspruch 8, wobei die Sichtfeldsteuerungsvorrichtung auf einer von der Anzeige (2) abgewandten und/oder dieser naheliegenden Oberfläche der planaren Linse (1) angeordnet ist.

## Revendications

1. Un appareil de contrôle de champ de vision pour un système d'imagerie optique, ledit appareil de contrôle de champ de vision comprenant :
un corps de base (302) translucide ; et
une pluralité de parties d'écrantage lumineux (303) disposées dans le corps de base (302) et parallèles entre elles, la pluralité de parties d'écrantage lumineux (303) étant disposées séquentiellement selon une première direction du corps de base (302) et au moins deux parties d'écrantage lumineux (303) adjacentes parmi la pluralité de parties d'écrantage lumineux (303) étant espacées l'une de l'autre pour former une région translucide entre les deux parties d'écrantage lumineux (303) adjacentes,
ledit appareil de contrôle de champ de vision comprenant en outre une source de rétroéclairage (306) configurée pour éclairer sélectivement la pluralité de parties d'écrantage lumineux (303) afin de commuter la pluralité de parties d'écrantage lumineux (303) entre un état d'écrantage lumineux et un état non d'écrantage lumineux,
au moins l'une parmi la pluralité de parties d'écrantage lumineux (303) comprenant : une première partie d'écrantage lumineux (308) et une seconde partie d'écrantage lumineux (309) empilées selon la direction d'épaisseur du corps de base (302), et la source de rétroéclairage comprenant : une première source de rétroéclairage (3061) configurée pour éclairer sélectivement la première partie d'écrantage lumineux (308) et une seconde source de rétroéclairage (3062) configurée pour éclairer sélectivement la seconde partie d'écrantage lumineux (309),
**caractérisé en ce que** l'appareil de contrôle de champ de vision comprend en outre une plaque de guidage de lumière (305) configurée pour guider la lumière émise par les sources de rétroéclairage (306) vers les parties d'écrantage lumineux (303) correspondantes aux sources de rétroéclairage (306), et la première source de rétroéclairage (3061) et la seconde source de rétroéclairage (3062) sont disposées radialement à l'extérieur de la plaque de guidage de lumière (305).

2. L'appareil de contrôle de champ de vision selon la revendication 1, **caractérisé en ce que** le corps de base (302) comporte une pluralité de parties de montage destinées à monter la pluralité de parties d'écrantage lumineux (303), la pluralité de parties d'écrantage lumineux (303) correspondant de manière biunivoque à la pluralité de parties de montage.

3. L'appareil de contrôle de champ de vision selon la revendication 2, **caractérisé en ce que** la pluralité de parties de montage est configurée sous la forme d'une rainure de montage, la rainure de montage s'étendant selon la direction d'épaisseur du corps de base (302).

4. L'appareil de contrôle de champ de vision selon la revendication 2 ou 3, **caractérisé en ce que** la pluralité de parties d'écrantage lumineux (303) est perpendiculaire au corps de base (302) selon la direction d'épaisseur du corps de base (302).

5. L'appareil de contrôle de champ de vision selon la revendication 2, **caractérisé en ce que** la pluralité de parties d'écrantage lumineux (303) s'étend de manière inclinée selon la direction d'épaisseur du corps de base (302).

6. L'appareil de contrôle de champ de vision selon l'une quelconque des revendications 1 à 5, **caractérisé en ce que** :
le corps de base (302) présente une première surface et une seconde surface opposées l'une à l'autre selon la direction d'épaisseur du corps de base (302), et
l'appareil de contrôle de champ de vision comprend en outre:
une première feuille de protection (301) translucide disposée sur la première surface ; et
une seconde feuille de protection (304) translucide disposée sur la seconde surface.

7. L'appareil de contrôle de champ de vision selon l'une quelconque des revendications 1 à 6, **caractérisé en ce que** la pluralité de parties d'écrantage lumineux (303) est configurée sous la forme d'une structure non translucide.

8. Un système d'imagerie optique comprenant :
une lentille plane (1) ;
un écran d'affichage (2) configuré pour émettre de la lumière vers la lentille plane (1) ; et
l'appareil de contrôle de champ de vision selon l'une quelconque des revendications 1 à 7, ledit appareil de contrôle de champ de vision étant disposé dans la lentille plane (1) et/ou dans l'écran d'affichage (2), et la lumière émise par l'écran d'affichage (2) vers la lentille plane (1) traversant l'appareil de contrôle de champ de vision.

9. Le système d'imagerie optique selon la revendication 8, **caractérisé en ce que** l'appareil de contrôle de champ de vision est disposé sur une surface de la lentille plane (1) éloignée de l'écran d'affichage (2) et/ou proche de l'écran d'affichage (2).
